# FASCICULE DE BREVET EUROPEEN

(11) **EP 4 189 855 B1**
(45) Date de publication et mention de la délivrance du brevet: **28.01.2026**
(21) Numéro de dépôt: 21762746.2
(22) Date de dépôt: 27.07.2021
(51) Int. Cl.: H04B 10/11, H04B 10/116

(54) **DISPOSITIF D'ISOLATION INTÉGRÉ DANS UN ÉQUIPEMENT DE COMMUNICATION OPTIQUE SANS FIL**
ISOLIERVORRICHTUNG, DIE IN EINE DRAHTLOSE OPTISCHE KOMMUNIKATIONSVORRICHTUNG INTEGRIERT IST
INSULATION DEVICE INCORPORATED IN A WIRELESS OPTICAL COMMUNICATION DEVICE

(30) Priorité: 30.07.2020 FR 2008138
(43) Date de publication de la demande: 07.06.2023
(73) Titulaire: Oledcomm, 78140 Velizy Villacoublay (FR)
(72) Inventeur: ESPINOZA-GARCIA, Alejandro, 78370 Plaisir (FR); LARTIGUE, Clément, 92140 Clamart (FR); DOMINGUEZ-GONZALEZ, Carlos, 92310 Sèvres (FR)
(74) Mandataire: Bonnet, Michel
(86) Numéro de dépôt international: PCT/FR2021/051402
(87) Numéro de publication internationale: WO 2022/023665

(56) Documents cités:
- US-A1- 2007 230 965
- US-B1- 6 751 420

## Description

L'invention concerne le domaine de la communication optique sans fil.

### ARRIERE PLAN DE L'INVENTION

Un système de communication optique sans fil (ou OWC, pour *Optical Wireless Communication*), par exemple un système de communication LiFi (pour *Light Fidelity*), comprend généralement deux principaux équipements :
- un point d'accès ;
- un terminal utilisateur.

Le point d'accès joue un rôle similaire à celui d'une passerelle WiFi.

Le terminal utilisateur est par exemple un ordinateur, un *smartphone* ou une tablette. La compatibilité du terminal peut être assurée à l'aide d'un *dongle* qui se branche par exemple sur un port USB du terminal.

En LiFi, un utilisateur peut accéder à un réseau (par exemple à Internet) via son terminal à partir du moment où ledit terminal est connecté à un point d'accès situé à proximité. Une fois cette connexion établie, le point d'accès pourra transmettre les données descendantes du réseau vers le terminal et donc vers l'utilisateur, alors que le terminal pourra faire remonter les données montantes vers le réseau via le point d'accès.

La qualité de cette communication bidirectionnelle (le débit, la latence, la couverture, etc.) dépend en grande partie de la qualité des signaux optiques reçus, par le terminal d'une part et par le point d'accès d'autre part. Cette qualité du signal est généralement évaluée par le rapport signal à bruit (ou SNR pour *Signal-to-Noise Ratio),* qui est le rapport entre la puissance du signal reçu et la puissance du bruit à la réception. Plus la puissance du signal reçu est grande et plus le bruit est faible, plus le SNR est élevé, et donc plus la qualité de la communication est élevée. L'optimisation du SNR est donc critique pour améliorer les performances d'un système de communication optique sans fil, tel qu'un système LiFi.

### OBJET DE L'INVENTION

L'invention a pour objet d'améliorer le rapport signal à bruit et la robustesse d'un équipement de communication optique sans fil.

### RESUME DE L'INVENTION

En vue de la réalisation de ce but, on propose un module optique selon la revendication indépendante 1, comprenant un dispositif d'isolation agencé pour être fixé sur une carte électrique d'un équipement de communication optique sans fil, la carte électrique comprenant une surface d'accueil sur laquelle est monté au moins un ensemble optique comprenant un concentrateur optique couplé à un photodétecteur, le dispositif d'isolation comportant une enceinte ayant une hauteur au moins égale à une hauteur de l'ensemble optique, l'enceinte comprenant dans son épaisseur un matériau opaque, le dispositif d'isolation comportant au moins un logement situé à l'intérieur de l'enceinte et ayant une forme complémentaire d'une forme du concentrateur optique,
le dispositif d'isolation étant agencé de sorte que, lorsque le dispositif d'isolation et l'ensemble optique sont montés sur la carte électrique, l'enceinte entoure la surface d'accueil de manière à isoler l'ensemble optique de signaux optiques indésirables, et le concentrateur optique est positionné dans le logement de sorte que le logement contribue au maintien en position du concentrateur optique dans l'équipement de communication optique sans fil.

Le dispositif d'isolation selon l'invention remplit donc (au moins) deux fonctions.

Le dispositif d'isolation permet de protéger le photodétecteur et le concentrateur optique contre les signaux optiques indésirables : lumière naturelle, éclairage de la pièce, signaux optiques émis par une source située dans l'équipement de communication optique sans fil, etc. On améliore ainsi le SNR de l'équipement de communication optique sans fil.

Le dispositif d'isolation contribue aussi au maintien en position du concentrateur optique, et donc améliore la robustesse de l'équipement de communication optique sans fil.

Dans le dispositif d'isolation de l'invention revendiquée, le logement comprend une cavité latérale formée dans une paroi latérale interne de l'enceinte et ayant une forme complémentaire d'une forme d'une surface latérale du concentrateur optique.

On propose de plus un dispositif d'isolation tel que précédemment décrit, dans lequel le logement comprend une cavité inférieure formée dans un fond du dispositif d'isolation et ayant une forme complémentaire d'une forme d'une surface inférieure du concentrateur optique.

On propose de plus un dispositif d'isolation tel que précédemment décrit, dans lequel la cavité inférieure est définie entre deux languettes qui s'étendent verticalement depuis le fond du dispositif d'isolation.

On propose de plus un dispositif d'isolation tel que précédemment décrit, dans lequel l'enceinte comprend dans son épaisseur un ou des matériaux formant un blindage électromagnétique de sorte que le dispositif d'isolation permet d'isoler l'ensemble optique de perturbations électromagnétiques pouvant être produites par des composants électriques situés à l'extérieur de l'enceinte.

On propose de plus un dispositif d'isolation tel que précédemment décrit, dans lequel le ou les matériaux formant le blindage électromagnétique comportent une couche de peinture comprenant du cuivre.

On propose de plus un dispositif d'isolation tel que précédemment décrit, dans lequel le ou les matériaux formant le blindage électromagnétique comportent des microparticules ou des nanoparticules métalliques intégrées dans l'enceinte.

On propose de plus un dispositif d'isolation tel que précédemment décrit, comprenant une pluralité de logements régulièrement répartis selon une circonférence interne de l'enceinte.

On propose en outre un équipement de communication optique sans fil, comportant le dispositif d'isolation précédemment décrit et la carte électrique.

On propose en outre un équipement de communication optique sans fil tel que précédemment décrit, comprenant un boîtier dans lequel sont intégrés la carte électrique et le dispositif d'isolation, ainsi qu'un couvercle agencé pour fermer à la fois le boîtier et un volume intérieur délimité par la carte électrique et l'enceinte du dispositif d'isolation.

On propose en outre un équipement de communication optique sans fil tel que précédemment décrit, dans lequel le couvercle est un filtre optique agencé pour filtrer des longueurs d'onde de manière à améliorer la réception de signaux optiques par l'équipement de communication optique dans fil.

On propose en outre un équipement de communication optique sans fil tel que précédemment décrit, l'équipement de communication optique sans fil étant un point d'accès.

On propose en outre un équipement de communication optique sans fil tel que précédemment décrit, l'équipement de communication optique sans fil étant un terminal utilisateur.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 est une vue en éclaté d'un point d'accès dans lequel est mise en œuvre l'invention ;
[Fig. 2] la figure 2 est une vue en perspective d'un concentrateur optique ;
[Fig. 3] la figure 3 est une vue de dessus du point d'accès sans le couvercle ;
[Fig. 4] la figure 4 est une vue en perspective d'une portion de la carte électrique sur laquelle sont montés les photodiodes et les concentrateurs optiques ;
[Fig. 5] la figure 5 est une vue en perspective et de dessus du dispositif d'isolation et des concentrateurs optiques ; [Fig. 6] la figure 6 est une vue en perspective et de dessus du dispositif d'isolation ;
[Fig. 7] la figure 7 est une vue en perspective et de dessous du dispositif d'isolation ;
[Fig. 8] la figure 8 est un graphique sur lequel figurent des courbes de coefficient de transmission en fonction de la longueur d'onde.

### DESCRIPTION DETAILLEE DE L'INVENTION

L'invention est mise en œuvre dans un équipement de communication optique sans fil appartenant à un système de communication optique sans fil.

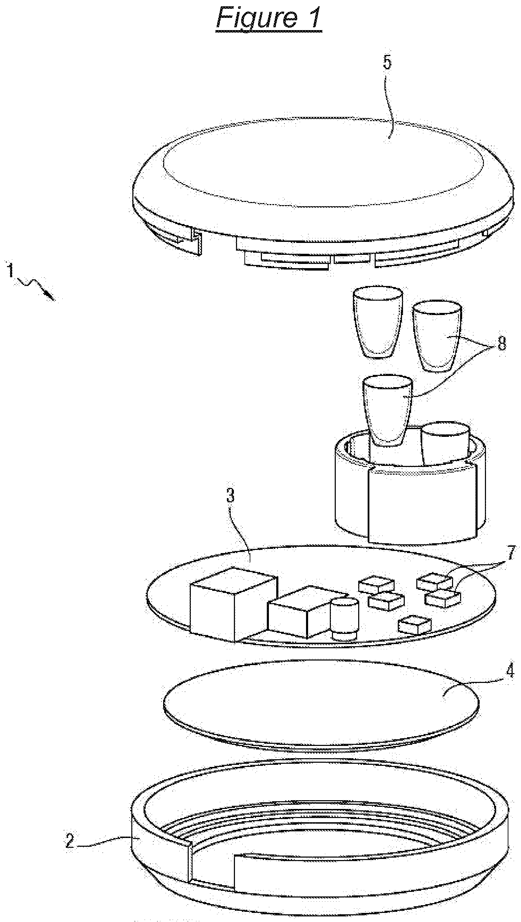

En référence à la figure 1, l'équipement est ici un point d'accès 1. La communication optique sans fil est par exemple une communication LiFi.

Le point d'accès 1 comporte un boîtier 2 à l'intérieur duquel est intégrée une carte électrique 3 qui repose sur un support 4 positionné au fond du boîtier 2. Un couvercle 5 permet de fermer le boîtier 2.

La carte électrique 3 comprend un certain nombre de composants électriques et optoélectroniques.

Certains de ces composants permettent de mettre en œuvre un dispositif de réception de signaux optiques. Les signaux optiques reçus sont émis par le terminal d'un utilisateur et transportent des données montantes.

Certains de ces composants permettent de mettre en œuvre un dispositif d'émission de signaux optiques. Les signaux optiques émis sont reçus par le terminal de l'utilisateur et transportent des données descendantes.

Le dispositif de réception comporte une pluralité de photodétecteurs, qui sont ici des photodiodes 7. Les photodétecteurs pourraient être de type différent, et comporter par exemple un ou plusieurs phototransistors (PT), une ou plusieurs photorésistances (PR), une ou plusieurs photodiodes PIN, une ou plusieurs photodiodes à avalanche, une ou plusieurs SPAD (pour *Single Photon Avalanche Diode*), un ou plusieurs capteurs CMOS (pour *Complementary Metal Oxide Semiconductor*), etc.

Chaque photodiode 7 est associée à un concentrateur optique 8 qui est positionné sur la photodiode 7.

Le concentrateur optique 8 est ici un concentrateur parabolique composé (CPC) qui a une génératrice parabolique externe définie pour collecter la lumière sur la photodiode. Ici, le mot « composé » fait référence au fait que le concentrateur réalise plusieurs fonctions optiques mises en œuvre en parallèle.

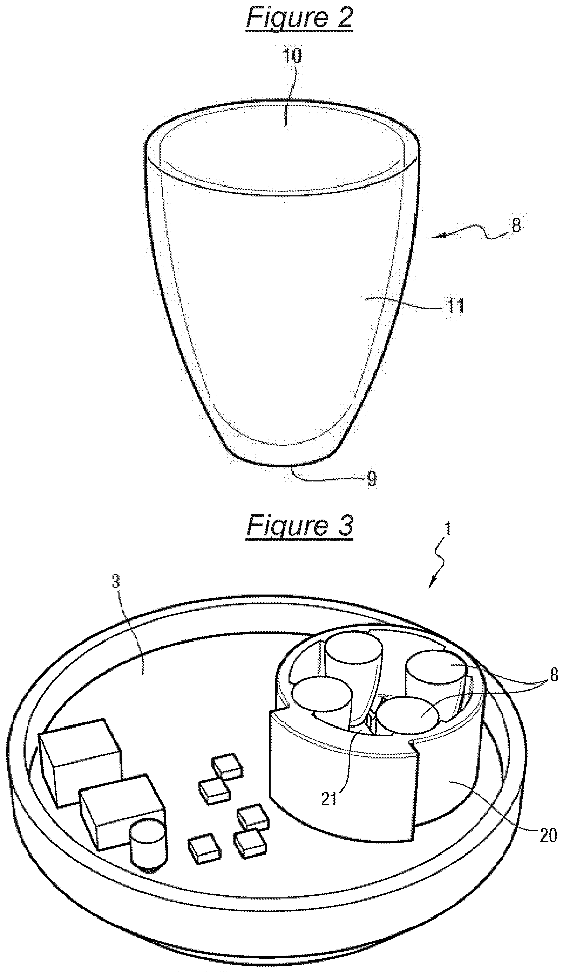

En référence à la figure 2, le concentrateur optique 8 présente donc une surface de couplage 9, une surface de collecte 10 des rayons lumineux, et une surface latérale 11 située entre la surface de collecte 10 et la surface de couplage 9.

La surface de couplage 9 est destinée à être positionnée sur une surface sensible de la photodiode 7, qui présente ici une forme rectangulaire (mais qui pourrait présenter une forme différente, par exemple carrée ou circulaire).

Le but du concentrateur optique 8 est de focaliser l'ensemble des rayons lumineux incidents à la surface de collecte 10 jusqu'à un certain angle, qui est l'angle d'acceptance, vers la surface de couplage 9 afin que ces rayons lumineux soient captés par la photodiode 7.

Avantageusement, on applique sur la surface latérale du concentrateur optique 8, à la fin de sa fabrication, un vernis antireflet ou une couche mince afin d'améliorer les performances de capture et de réflexions totales internes du concentrateur optique 8.

Le point d'accès 1 comporte ici quatre ensembles optiques comprenant chacun un concentrateur optique 8 couplé à une photodiode 7.

Dans chaque ensemble optique, la surface de couplage 9 du concentrateur optique 8 est positionnée sur la surface sensible de la photodiode 7. La surface de couplage 9 du concentrateur optique 8 est collée sur la surface sensible de la photodiode 7. La colle utilisée ici est une colle polymère.

La colle polymère remplit deux fonctions. Elle permet de fixer le concentrateur optique 8 à la photodiode 7. Par ailleurs, ses propriétés physiques et chimiques sont telles qu'elle absorbe très peu les rayons lumineux de longueur d'onde proche de 940 nm, ce qui permet d'optimiser la puissance des signaux optiques effectivement collectés par la photodiode 7.

Au moment de l'assemblage du point d'accès 1, la colle est d'abord appliquée sur les surfaces sensibles des photodiodes 7, puis les concentrateur optique 8 sont posés sur les surfaces sensibles. On expose alors la colle à un rayonnement ultraviolet à l'aide d'une lampe à rayons ultraviolets. La colle se polymérise sous l'action du rayonnement ultraviolet et durcit pour coller la surface de couplage 9 de chaque concentrateur optique 8 sur la surface sensible d'une photodiode 7.

En référence aux figures 3 à 7, le point d'accès 1 comporte de plus un dispositif d'isolation 20 qui est monté sur la carte électrique 3 de manière à entourer la surface d'accueil 21 de la carte électrique 3 sur laquelle sont montés les quatre ensembles optiques qui comprennent chacun un concentrateur optique 8 couplé à une photodiode 7.

Le dispositif d'isolation 20 comporte une partie principale 22 et une partie secondaire 23.

La partie principale 22 comprend une enceinte 24 et une face inférieure 25. L'enceinte 24 a pour forme générale la forme d'une première bague. La face inférieure 25 referme partiellement la première bague au niveau de son extrémité inférieure. La face inférieure 25 comporte une ouverture centrale 26 ayant la forme d'une croix comprenant quatre branches de même longueur formées selon deux directions perpendiculaires l'une par rapport à l'autre. Une surface interne de la face inférieure 25 forme un fond 27 du dispositif d'isolation 20.

La partie secondaire 23 forme une surépaisseur de la partie principale 22, qui s'étend depuis une portion angulaire minoritaire de la partie principale 22 vers l'extérieur. La partie secondaire 23 présente la forme d'une portion angulaire d'une deuxième bague coaxiale à la première bague mais de rayon supérieur. La partie secondaire 23 est creuse. La partie secondaire 23 est fermée au niveau de sa face supérieure 28 et est ouverte au niveau de sa face inférieure 29.

La hauteur de l'enceinte 24 de la partie principale 22 est au moins égale à la hauteur d'un ensemble optique, c'est-à-dire à la somme de la hauteur de la photodiode 7 et de la hauteur du concentrateur optique 8 formant l'ensemble optique. Ici, la hauteur de l'enceinte 24 est égale à la hauteur de chaque ensemble optique.

L'enceinte 24 de la partie principale 22 comprend un corps interne 30 et une couche externe 31 qui sont définis successivement dans l'épaisseur de l'enceinte 24.

Le corps interne 30 de l'enceinte 24, ainsi que la face inférieure 25 de la partie principale 22, comportent un matériau opaque, qui est ici un plastique permettant de fabriquer le dispositif d'isolation 20 via un procédé de fabrication additive.

La couche externe 31 comporte un ou des matériaux formant un blindage électromagnétique.

Ces matériaux comprennent ici une couche de peinture comprenant du cuivre, qui est appliquée sur le corps interne 30. La couche externe 31 est reliée à une masse électrique GND de la carte électrique 3.

Avantageusement, ces matériaux comprennent aussi des microparticules ou des nanoparticules métalliques, magnétiques ou non magnétiques, intégrées dans le corps interne 30 de l'enceinte 24. Ces particules forment une poudre de grains ultrafins, semblable à une poudre de toner d'imprimante laser. Les particules peuvent être intégrées et orientées lors du moulage par injection du dispositif d'isolation 20, lorsque celui-ci est fabriqué avec ce procédé.

Le dispositif d'isolation 20 comporte quatre logements 34 situés à l'intérieur de l'enceinte 24. Par « à l'intérieur de l'enceinte », on entend que les logements sont définis dans un espace intérieur délimité par l'enceinte.

Chaque logement 34 est positionné au-dessus de l'une des branches de la croix qui a été évoquée plus tôt. Les logements 34 sont donc régulièrement répartis selon une circonférence interne de l'enceinte 24.

Chaque logement 34 a une forme complémentaire de la forme du concentrateur optique 8.

Chaque logement 34 comprend une cavité latérale 35 formée dans une paroi latérale interne de l'enceinte 24. La cavité latérale 35 s'étend selon la hauteur de l'enceinte 24 et a une forme complémentaire de la forme de la surface latérale 11 du concentrateur optique 8.

Le logement 34 comprend de plus une cavité inférieure 36 formée dans le fond 27 du dispositif d'isolation 20. La cavité inférieure 36 a une forme complémentaire de la forme de la surface inférieure du concentrateur optique 8. La cavité inférieure 36 est définie entre deux languettes 37 qui s'étendent verticalement depuis le fond 27 du dispositif d'isolation 20. Chaque languette 37 s'étend de part et d'autre de la branche de la croix au-dessus de laquelle est positionné le logement 34.

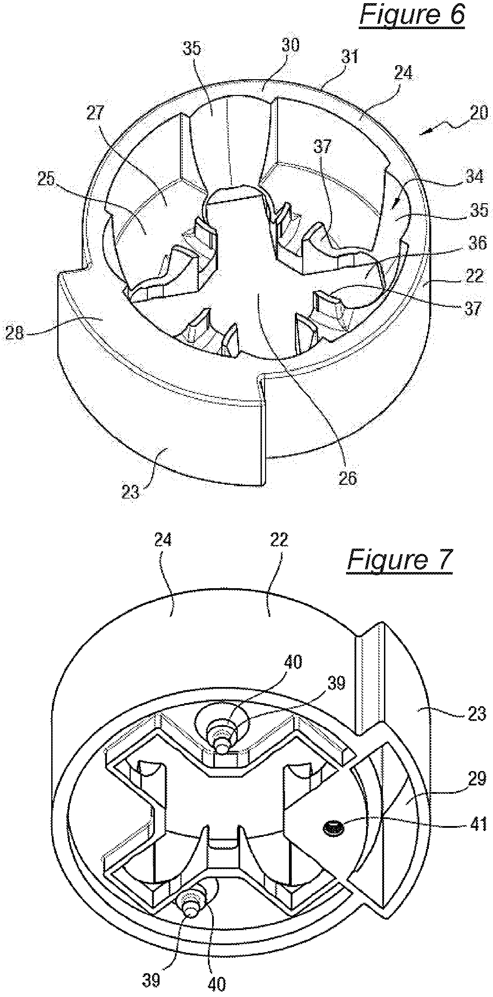

En référence à la figure 7, on voit que le dispositif d'isolation 20 comporte deux pions de fixation 39 qui s'étendent chacun verticalement depuis la surface externe de la face inférieure 25 de la partie principale 22 du dispositif d'isolation 20. Les deux pions de fixation 39 sont positionnés chacun dans un quadrant opposé de la surface externe de la face inférieure 25.

Une gorge 40 est formée dans chaque pion de fixation 39, de sorte que le diamètre du pion de fixation 39 à mi-hauteur est inférieur à son diamètre au niveau de son extrémité libre et au niveau de sa base.

Un trou taraudé 41 traversant la face inférieure 25 est pratiqué dans un troisième quadrant de la face inférieure 25.

Pour fixer le dispositif d'isolation 20 sur la carte électrique 3, on pose tout d'abord la face inférieure 25 sur une face de la carte électrique 3.

Chaque pion de fixation 39 est assemblé par encliquetage dans un trou prévu à cet effet dans la carte électrique 3.

Le dispositif d'isolation 20 est alors vissé à la carte électrique 3. Une vis, qui s'étend au travers de la carte électrique 3 dans un trou prévu à cet effet, est vissée dans le trou taraudé 41 du dispositif d'isolation 20.

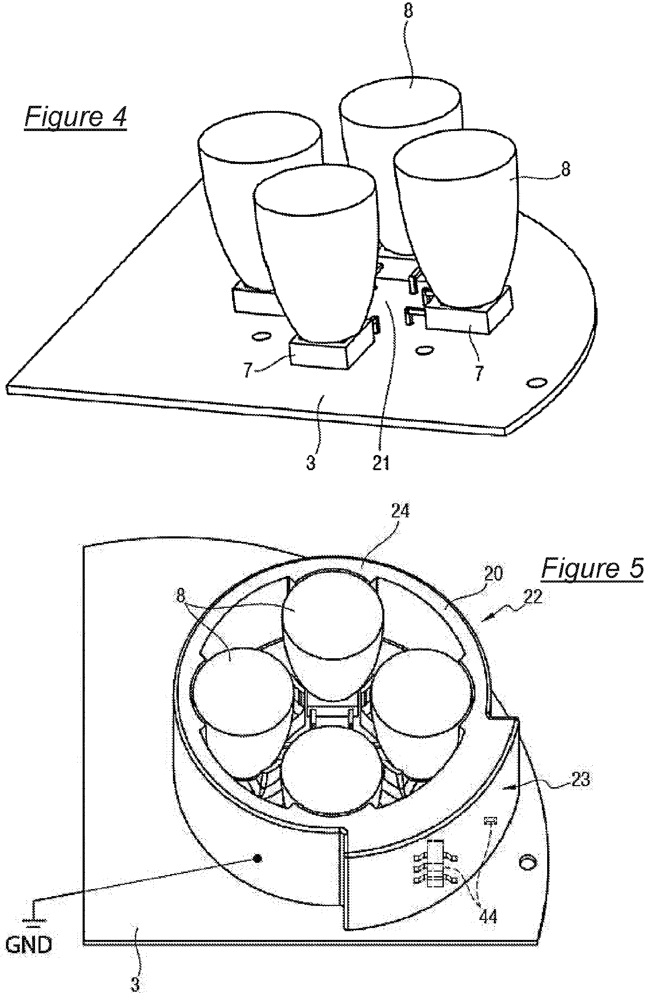

On remarque sur la figure 5 que la partie secondaire 23 du dispositif d'isolation 20, qui est creuse, recouvre des composants électriques 44 situés sur la carte électrique 3 à l'extérieur de la surface d'accueil 21. Le dispositif d'isolation 20 est donc intégré dans le point d'accès 1 sans que l'implantation des composants sur la carte électrique 3 ne soit adaptée à sa présence. La partie secondaire 23 permet donc d'améliorer l'intégration du dispositif d'isolation 20 tout en conservant l'épaisseur et la hauteur de l'enceinte 24.

Lorsque le dispositif d'isolation 20 et les quatre ensembles optiques sont montés sur la carte électrique 3, l'enceinte 24 entoure la surface d'accueil 21 de la carte électrique 3 sur laquelle sont positionnés les quatre ensembles optiques.

Chaque concentrateur optique 8 est positionné dans l'un des logements 34. La surface latérale 11 dudit concentrateur optique 8 est positionnée dans la cavité latérale 35 dudit logement 34, et la surface inférieure dudit concentrateur optique 8 est positionnée dans la cavité inférieure 36 dudit logement 34.

Le dispositif d'isolation 20 remplit trois fonctions distinctes : une fonction de maintien mécanique, une fonction d'isolation optique et une fonction d'isolation électromagnétique.

Chaque concentrateur optique 8 est positionné dans un logement 34 du dispositif d'isolation 20, de sorte que ledit logement 34 contribue au maintien en position du concentrateur optique 8 dans le point d'accès 1. Les concentrateurs optiques 8 ne peuvent pas bouger latéralement, de sorte que la colle ne subit pas de contrainte mécanique. La fixation des concentrateurs optiques 8 aux photodiodes 7 demeure robuste dans le temps.

L'enceinte 24, grâce au matériau opaque intégré dans son épaisseur, isole les quatre ensembles optiques des signaux optiques indésirables. Le couvercle 5 contribue aussi à cette isolation optique : lorsque le couvercle 5 ferme le boîtier 2 du point d'accès 1, le couvercle 5 ferme aussi le volume intérieur délimité par la carte électrique 3 et l'enceinte 24 du dispositif d'isolation 20.

Les signaux optiques indésirables comprennent les rayons lumineux émis par la ou les sources lumineuses du point d'accès 1. Les sources lumineuses sont ici des LEDs utilisées pour émettre des signaux optiques à destination d'un terminal utilisateur. Les sources lumineuses sont situées sur la carte électrique 3 à l'extérieur de l'enceinte 24.

Sans le dispositif d'isolation 20, les concentrateurs optiques 8 pourraient capter des rayons lumineux provenant de ces sources lumineuses et les rediriger vers les photodiodes 7, ce qui introduirait un phénomène d'interférences aussi appelé *crosstalk,* et donc une dégradation de la qualité de la communication.

Les signaux optiques indésirables comprennent aussi la lumière naturelle, l'éclairage d'une pièce, etc.

On note que les logements 34 permettent aussi d'améliorer les capacités de réflexions totales internes des concentrateurs optiques 8.

L'enceinte 24, grâce aux matériaux formant le blindage électromagnétique, c'est-à-dire ici grâce à la couche de peinture comprenant du cuivre et aux nanoparticules métalliques intégrées dans le corps interne 30 de l'enceinte 24, permet aussi d'isoler les quatre ensembles optiques de perturbations électromagnétiques pouvant être produites par des composants électriques du point d'accès 1 situés à l'extérieur de l'enceinte 24 (et par des appareils situés à proximité du point d'accès 1). Le blindage électromagnétique permet de limiter la pénétration des rayonnements électromagnétiques au niveau de la surface d'accueil 21 de la carte électrique 3 sur laquelle sont montés les photodiodes 7 et les concentrateurs optiques 8. Les particules métalliques intégrées dans le corps interne 30 de l'enceinte 24 permettent de réduire encore plus le bruit d'interférences.

Le courant photoélectrique produit par les photodiodes 7, qui est proportionnel à la puissance du signal lumineux reçu, est en effet généralement très faible et donc facilement perturbé par les différentes sources de bruit environnantes. Ainsi, les rayonnements électromagnétiques, s'ils ne sont pas bloqués, peuvent venir dégrader ce courant photoélectrique, et donc dégrader le rapport signal à bruit et donc les performances de communication.

Le couvercle 5, quant à lui, remplit trois fonctions.

On a vu plus tôt que le couvercle 5 contribue, avec le dispositif d'isolation 20, à isoler optiquement les ensembles optiques.

En refermant le boîtier 2, le couvercle 5 permet aussi de protéger l'intérieur du point d'accès 1 des agressions externes : chocs, poussière, etc.

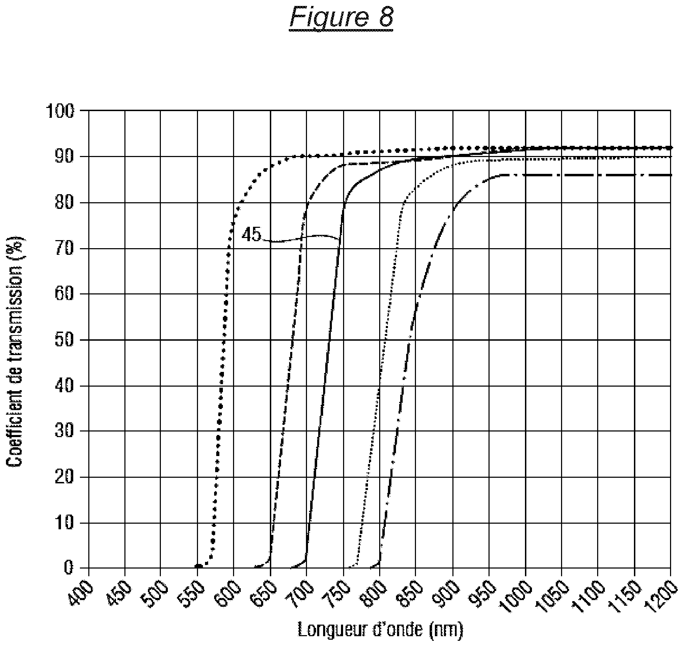

Le couvercle 5 joue enfin le rôle d'un filtre optique, ici infrarouge, permettant d'optimiser les performances de communication. Le couvercle 5 ne laisse passer que les longueurs d'ondes de 700 nm et plus. La courbe 45 du coefficient de transmission du couvercle 5 est visible sur la figure 8. Grâce au couvercle 5, les rayons lumineux hors de cette bande de longueurs d'ondes sont absorbés (c'est à dire une grande partie de la lumière naturelle, des éclairages artificiels, etc.) et ne sont pas reçus sous forme de bruit par les photodiodes 7.

Bien entendu, l'invention n'est pas limitée au mode de réalisation décrit mais englobe toute variante entrant dans le champ de l'invention telle que définie par les revendications.

On a mis ici l'invention en œuvre dans un point d'accès. Le dispositif d'isolation peut cependant bien sûr être intégré dans tout type d'équipement qui met en œuvre une communication optique sans fil, et par exemple dans un terminal utilisateur.

Le concentrateur optique utilisé n'est pas nécessairement un CPC mais pourrait être tout type de concentrateur : concentrateur creux (éventuellement assemblé avec une lentille), concentrateur diélectrique et monobloc, concentrateur elliptique composé, concentrateur couplé comprenant un premier concentrateur intégré dans un deuxième concentrateur, concentrateur de type *Lens-walled,* etc.

## Revendications

1. Module optique (7, 8, 20) pour équipement de communication optique sans fil (1), apte à être monté sur une carte électrique (3) de cet équipement de communication optique sans fil (1), comportant :
- au moins un ensemble optique (7,8), chaque ensemble optique (7, 8) comprenant un concentrateur optique (8) couplé à un photodétecteur (7), apte à être monté sur une surface d'accueil (21) de la carte électrique,
- un dispositif d'isolation (20) agencé pour être fixé sur la carte électrique (3), comportant une enceinte (24) ayant une hauteur au moins égale à une hauteur de chaque ensemble optique (7, 8), l'enceinte (24) comprenant dans son épaisseur un matériau opaque, le dispositif d'isolation (20) comportant au moins un logement (34) situé à l'intérieur de l'enceinte (24),
chaque concentrateur optique (8) présentant une surface de collecte (10) de rayons lumineux, une surface de couplage (9) avec le photodétecteur (7) de son ensemble optique (7, 8), et une surface latérale (11) située entre la surface de collecte (10) et la surface de couplage (9),
le dispositif d'isolation (20) étant agencé de sorte que, lorsque le module optique est monté sur la carte électrique (3), l'enceinte (24) entoure la surface d'accueil (21) de manière à isoler l'ensemble optique (7, 8) de signaux optiques indésirables, et le concentrateur optique (8) est positionné dans le logement (34) de sorte que le logement contribue au maintien en position du concentrateur optique (8) dans l'équipement de communication optique sans fil (1), **caractérisé en ce que** :
- la forme de la surface latérale (11) de chaque concentrateur optique (8) est spécifiquement conçue pour focaliser l'ensemble des rayons lumineux incidents à la surface de collecte (10), jusqu'à un certain angle qui est l'angle d'acceptance, vers la surface de couplage (9) afin que ces rayons lumineux soient captés par le photodétecteur (7), et
- chaque logement (34) comprend une cavité latérale (35) formée dans une paroi latérale interne saillante s'étendant vers l'intérieur de l'enceinte (24) et ayant une forme complémentaire de la forme spécifique de la surface latérale (11) du concentrateur optique (8) qu'il reçoit de sorte que ce dernier ne puisse pas bouger latéralement.

2. Module optique (7, 8, 20) selon la revendication 1, dans lequel chaque logement (34) comprend une cavité inférieure (36) formée dans un fond (27) du dispositif d'isolation (20) et ayant une forme complémentaire d'une forme de la surface de couplage (9) du concentrateur optique (8) qu'il reçoit.

3. Module optique (7, 8, 20) selon la revendication 2, dans lequel la cavité inférieure (36) est définie entre deux languettes (37) qui s'étendent verticalement depuis le fond (27) du dispositif d'isolation (20).

4. Module optique (7, 8, 20) selon l'une des revendications précédentes, dans lequel l'enceinte (24) comprend dans son épaisseur un ou des matériaux formant un blindage électromagnétique de sorte que le dispositif d'isolation (20) permet d'isoler chaque ensemble optique (7, 8) de perturbations électromagnétiques pouvant être produites par des composants électriques situés à l'extérieur de l'enceinte (24).

5. Module optique (7, 8, 20) selon la revendication 4, dans lequel le ou les matériaux formant le blindage électromagnétique comportent une couche de peinture comprenant du cuivre.

6. Module optique (7, 8, 20) selon l'une des revendications 4 ou 5, dans lequel le ou les matériaux formant le blindage électromagnétique comportent des microparticules ou des nanoparticules métalliques intégrées dans l'enceinte (24).

7. Module optique (7, 8, 20) selon l'une des revendications précédentes, comprenant une pluralité d'ensembles optiques (7,8) et une pluralité respective de logements (35) régulièrement répartis selon une circonférence interne de l'enceinte (24).

8. Equipement de communication optique sans fil (1), comportant une carte électrique (3) et un module optique (7, 8, 20), selon l'une des revendications précédentes, monté sur la carte électrique (3).

9. Equipement de communication optique sans fil (1) selon la revendication 8, comprenant un boîtier (2) dans lequel sont intégrés la carte électrique (3) et le dispositif d'isolation (20), ainsi qu'un couvercle (5) agencé pour fermer à la fois le boîtier et un volume intérieur délimité par la carte électrique et l'enceinte (24) du dispositif d'isolation.

10. Equipement de communication optique sans fil (1) selon la revendication 9, dans lequel le couvercle (5) est un filtre optique agencé pour filtrer des longueurs d'onde de manière à améliorer la réception de signaux optiques par l'équipement de communication optique dans fil.

11. Equipement de communication optique sans fil (1) selon l'une des revendications 8 à 10, l'équipement de communication optique sans fil étant un point d'accès (1).

12. Equipement de communication optique sans fil (1) selon l'une des revendications 8 à 10, l'équipement de communication optique sans fil étant un terminal utilisateur.

## Patentansprüche

1. Optisches Modul (7, 8, 20) für eine drahtlose optische Kommunikationseinrichtung (1), das dazu ausgelegt ist, auf einer Leiterplatte (3) dieser drahtlosen optischen Kommunikationseinrichtung (1) montiert zu werden, das Folgendes aufweist:
- mindestens eine optische Einheit (7, 8), wobei jede optische Einheit (7, 8) einen optischen Konzentrator (8) umfasst, der mit einem Fotodetektor (7) gekoppelt ist, der dazu ausgelegt ist, auf einer Aufnahmefläche (21) der Leiterplatte montiert zu werden,
- eine Isoliervorrichtung (20), die so angeordnet ist, dass sie auf der Leiterplatte (3) befestigt werden kann, und die ein Gehäuse (24) mit einer Höhe aufweist, die mindestens der Höhe jeder optischen Einheit (7, 8) entspricht, wobei das Gehäuse (24) in seiner Dicke ein undurchsichtiges Material umfasst, wobei die Isoliervorrichtung (20) mindestens eine Aufnahme (34) aufweist, die sich in dem Inneren des Gehäuses (24) befindet,
wobei jeder optische Konzentrator (8) eine Lichtstrahlen-Sammelfläche (10), eine Kopplungsfläche (9) mit dem Fotodetektor (7) seiner optischen Einheit (7, 8) und eine Seitenfläche (11) besitzt, die sich zwischen der Sammelfläche (10) und der Kopplungsfläche (9) befindet,
wobei die Isoliervorrichtung (20) so angeordnet ist, dass, wenn das optische Modul auf der Leiterplatte (3) montiert ist, das Gehäuse (24) die Aufnahmefläche (21) umgibt, um die optische Einheit (7, 8) von unerwünschten optischen Signalen zu isolieren, und der optische Konzentrator (8) so in der Aufnahme (34) positioniert ist, dass die Aufnahme dazu beiträgt, den optischen Konzentrator (8) in der drahtlosen optischen Kommunikationseinrichtung (1) in Position zu halten, **dadurch gekennzeichnet, dass**:
- die Form der Seitenfläche (11) jedes optischen Konzentrators (8) speziell so ausgestaltet ist, dass sie alle auf die Sammelfläche (10) auftreffenden Lichtstrahlen bis zu einem bestimmten Winkel, der der Akzeptanzwinkel ist, auf die Kopplungsfläche (9) fokussiert, damit diese Lichtstrahlen von dem Fotodetektor (7) erfasst werden, und
- jede Aufnahme (34) einen seitlichen Hohlraum (35) umfasst, der in einer sich nach innen des Gehäuses (24) erstreckenden vorstehenden inneren Seitenwand ausgebildet ist und eine Form aufweist, die mit der spezifischen Form der Seitenfläche (11) des optischen Konzentrators (8), den er aufnimmt, komplementär ist, sodass sich dieser nicht seitlich bewegen kann.

2. Optisches Modul (7, 8, 20) nach Anspruch 1, wobei jede Aufnahme (34) einen unteren Hohlraum (36) umfasst, der in einem Boden (27) der Isoliervorrichtung (20) ausgebildet ist und eine Form hat, die mit einer Form der Kopplungsfläche (9) des optischen Konzentrators (8), den er aufnimmt, komplementär ist.

3. Optisches Modul (7, 8, 20) nach Anspruch 2, wobei der untere Hohlraum (36) zwischen zwei Laschen (37) definiert ist, die sich vertikal von dem Boden (27) der Isoliervorrichtung (20) erstrecken.

4. Optisches Modul (7, 8, 20) nach einem der vorhergehenden Ansprüche, wobei das Gehäuse (24) in seiner Dicke ein oder mehrere Materialien umfasst, die eine elektromagnetische Abschirmung bilden, so dass die Isoliervorrichtung (20) es ermöglicht, jede optische Einheit (7, 8) von elektromagnetischen Störungen zu isolieren, die von elektrischen Komponenten außerhalb des Gehäuses (24) erzeugt werden können.

5. Optisches Modul (7, 8, 20) nach Anspruch 4, wobei das oder die Materialien, die die elektromagnetische Abschirmung bilden, eine Lackschicht aufweisen, die Kupfer umfasst.

6. Optisches Modul (7, 8, 20) nach einem der Ansprüche 4 oder 5, wobei das oder die Materialien, die die elektromagnetische Abschirmung bilden, Mikro- oder Nanopartikel aus Metall aufweisen, die in das Gehäuse (24) integriert sind.

7. Optisches Modul (7, 8, 20) nach einem der vorhergehenden Ansprüche, umfassend eine Vielzahl von optischen Einheiten (7,8) und eine jeweilige Vielzahl von Aufnahmen (35), die gleichmäßig entlang eines Innenumfangs des Gehäuses (24) verteilt sind.

8. Drahtlose optische Kommunikationseinrichtung (1), die eine Leiterplatte (3) und ein optisches Modul (7, 8, 20) nach einem der vorhergehenden Ansprüche, das auf der Leiterplatte (3) montiert ist, umfasst.

9. Drahtlose optische Kommunikationseinrichtung (1) nach Anspruch 8, die ein Schutzgehäuse (2), in das die Leiterplatte (3) und die Isoliervorrichtung (20) integriert sind, sowie einen Deckel (5) umfasst, der so angeordnet ist, dass er sowohl das Gehäuse als auch ein von der Leiterplatte und dem Gehäuse (24) der Isoliervorrichtung begrenztes Innenvolumen verschließt.

10. Drahtlose optische Kommunikationseinrichtung (1) nach Anspruch 9, wobei der Deckel (5) ein optischer Filter ist, der so angeordnet ist, dass er Wellenlängen filtert, um den Empfang optischer Signale durch die drahtgebundene optische Kommunikationseinrichtung zu verbessern.

11. Drahtlose optische Kommunikationseinrichtung (1) nach einem der Ansprüche 8 bis 10, wobei die drahtlose optische Kommunikationseinrichtung ein Zugangspunkt (1) ist.

12. Drahtlose optische Kommunikationseinrichtung (1) nach einem der Ansprüche 8 bis 10, wobei die drahtlose optische Kommunikationseinrichtung ein Benutzerendgerät ist.

## Claims

1. An optical module (7, 8, 20) for optical wireless communication equipment (1), capable of being mounted on an electrical board (3) of said optical wireless communication equipment (1), comprising:
- at least one optical assembly (7, 8), each optical assembly (7, 8) comprising an optical concentrator (8) coupled to a photodetector (7), capable of being mounted on a receiving surface (21) of the electrical board,
- An insulation device (20) arranged to be fixed on the electrical board (3), comprising an enclosure (24) having a height at least equal to a height of each optical assembly (7, 8), the enclosure (24) comprising in its thickness an opaque material, the insulation device (20) comprising at least one housing (34) located inside the enclosure (24),
each optical concentrator (8) having a light ray collecting surface (10), a coupling surface (9) with the photodetector (7) of its optical assembly (7, 8), and a lateral surface (11) located between the collecting surface (10) and the coupling surface (9),
the insulation device (20) being arranged such that, when the optical module is mounted on the electrical board (3), the enclosure (24) surrounds the receiving surface (21) so as to insulate the optical assembly (7, 8) from unwanted optical signals, and the optical concentrator (8) is positioned in the housing (34) such that the housing assists in holding the optical concentrator (8) in position in the optical wireless communication equipment (1), **characterized in that**:
- the shape of the lateral surface (11) of each optical concentrator (8) is specifically designed to focus all the light rays incident to the collecting surface (10), up to a certain angle which is the acceptance angle, towards the coupling surface (9) so that these light rays are captured by the photodetector (7), and
- each housing (34) comprises a lateral cavity (35) formed in a protruding inner side wall extending toward the interior of the enclosure (24) and having a shape complementary to the specific shape of the lateral surface (11) of the optical concentrator (8) that it receives, so that the latter cannot move laterally.

2. The optical module (7, 8, 20) according to claim 1, wherein each housing (34) comprises a lower cavity (36) formed in a bottom (27) of the insulation device (20) and having a shape complementary to a shape of the coupling surface (9) of the optical concentrator (8) that it receives.

3. The optical module (7, 8, 20) according to claim 2, wherein the lower cavity (36) is defined between two tabs (37) which extend vertically from the bottom of the insulation device (20).

4. The optical module (7, 8, 20) according to any of the preceding claims, wherein the enclosure (24) comprises within its thickness one or more materials forming an electromagnetic shield so that the insulation device (20) insulates each optical assembly (7, 8) from electromagnetic disturbances that may be produced by electrical components located outside the enclosure (24).

5. The optical module (7, 8, 20) according to claim 4, wherein the material(s) forming the electromagnetic shield comprise a paint layer comprising copper.

6. The optical module (7, 8, 20) according to any of claims 4 or 5, wherein the material(s) forming the electromagnetic shield comprise metallic microparticles or nanoparticles embedded in the enclosure (24).

7. The optical module (7, 8, 20) according to any of the preceding claims, comprising a plurality of optical assemblies (7, 8) and a respective plurality of housings (35) evenly distributed around an inner circumference of the enclosure (24) .

8. An optical wireless communication equipment (1), comprising an electrical board (3) and an optical module (7, 8, 20), according to one of the preceding claims, mounted on the electrical board (3).

9. The optical wireless communication equipment (1) according to claim 8, comprising a housing (2) wherein the electrical board (3) and the insulation device (20) are integrated, as well as a cover (5) arranged to close both the housing and an inner volume delimited by the electrical board and the enclosure (24) of the insulation device.

10. The optical wireless communication equipment (1) according to claim 9, wherein the cover (5) is an optical filter arranged to filter wavelengths so as to improve reception of optical signals by the optical wireless communication equipment.

11. The optical wireless communication equipment (1) according to any of claims 8 to 10, the optical wireless communication equipment being an access point (1).

12. The optical wireless communication equipment (1) according to any of claims 8 to 10, the optical wireless communication equipment being a user terminal.
